# EUROPEAN PATENT APPLICATION

(11) **EP 4 624 141 A1**
(43) Date of publication of application: **01.10.2025**
(21) Application number: 24166704.7
(22) Date of filing: 27.03.2024
(51) Int. Cl.: B29C 70/32, B29C 53/80, B29C 53/82, B29C 53/62, F16L 9/16, B29C 33/50

(54) **MANUFACTURING OF FIBER-MATRIX COMPOSITES COMPONENTS**

(71) Applicant: Airbus Operations GmbH, 21129 Hamburg (DE)
(72) Inventor: Wesseloh, Marc, 21129 Hamburg (DE); Benthien, Hermann, 21129 Hamburg (DE)

(57) **Abstract**

The present invention relates to the field of manufacturing of fiber-matrix composites components. In order to provide an improved and more efficient manufacturing setup, a manufacturing tool (10) with an adaptable form for winding applications of fiber-matrix composites to generate duct components from fiber-matrix composites is provided. The tool comprises a support structure (12), an outer deposit surface (14) and a plurality of adjustable manipulators (16). The support structure has at least two support connectors (18) and is configured to be mounted to bearings of a winding manufacturing system by the support connectors. The outer deposit surface is configured for material deposit support and to provide a variable circumferential contour for laying down fiber material in a winding process. The adjustable manipulators are arranged between the outer deposit surface and the support structure to adjustably support the outer deposit surface on the support structure. The adjustable manipulators are configured to adjust a distance between the outer deposit surface and the support structure in order to provide different adjustable outer shapes of the manufacturing tool.

## Description

### FIELD OF THE INVENTION

The present invention relates to the field of manufacturing of fiber-matrix composites components. The present invention relates in particular to a manufacturing tool with an adaptable form for winding applications of fiber-matrix composites to generate duct components from fiber-matrix composites, to a winding manufacturing system for generating duct components from fiber-matrix composites and to a method for generating a duct component from fiber-matrix composites in a winding application of fiber-matrix composites.

### BACKGROUND OF THE INVENTION

In aircrafts, weight savings are becoming one of the core aspects in view of fuel saving efforts. Fiber-matrix composite materials are applied to complement or even completely replace metal materials. Besides the fuselage with its airframe and skin, also components like floor construction, cabin linings and cabin equipment such as bins and monuments are at least partly made from fiber-matrix composite materials. For further weight reduction, also infrastructure parts like air ducts of the cabin air supply can be made from fiber-matrix composite materials. However, it has been shown that due to the complex and varying design of such ducts, manufacturing becomes quite challenging and inefficient in economic terms.

### SUMMARY OF THE INVENTION

There may thus be a need to provide an improved and more efficient manufacturing setup of fiber-matrix composites components.

The object of the present invention is solved by the subject-matter of the independent claims; further embodiments are incorporated in the dependent claims. It should be noted that the following described aspects of the invention apply also for the manufacturing tool with an adaptable form for winding applications of fiber-matrix composites to generate duct components from fiber-matrix composites, for the winding manufacturing system for generating duct components from fiber-matrix composites and for the method for generating a duct component from fiber-matrix composites in a winding application of fiber-matrix composites.

According to the present invention, a manufacturing tool with an adaptable form for winding applications of fiber-matrix composites to generate duct components from fiber-matrix composites is provided. The tool comprises a support structure, an outer deposit surface and a plurality of adjustable manipulators. The support structure has at least two support connectors and is configured to be mounted to bearings of a winding manufacturing system by the support connectors. The outer deposit surface is configured for material deposit support and provides a variable circumferential contour for laying down fiber material in a winding process. The adjustable manipulators are arranged between the outer deposit surface and the support structure to adjustably support the outer deposit surface on the support structure. The adjustable manipulators are configured to adjust a distance between the outer deposit surface and the support structure in order to provide different adjustable outer shapes of the manufacturing tool.

As a result, a dynamic adaptable manufacturing tool (DMT) is provided.

Advantageously, a single tool with a multi shape function is provided. One tool can be used for different shapes. The tool can be reused; a so-called dead-mold form is avoided. Thus, a sustainable tool is provided, also meaning less waste material.

Examples for winding applications are air-conditioning pipes and ducts in aircrafts and other vehicles. Different shapes, length and diameters may be required in one part. This leads to complex tool design. The adaptable manufacturing tool allows changes of the tool, i.e. tooling production and configuration is facilitated. In addition, also tool development is improved, as the adaptable manufacturing tool enables changes during the development phase.

According to an example, the plurality of adjustable manipulators comprises a plurality of pressurizable reservoirs arranged below the outer deposit surface. Further, a change of a pressure of a fluid inside the reservoir results in a change of a form of the reservoir which leads to change of the contour of the outer deposit surface.

According to an example, the reservoirs are pressurizable between a depressurized state and a maximum pressurized state.

In an option, the reservoirs are pressurizable individually.

According to an example, at least one of the pressurizable reservoirs is fluidly connected to a fluid supply.

According to an example, the plurality of pressurizable reservoirs is arranged as a web with a number of pressurizable reservoirs in a circumferential direction around a centerline and a number of pressurizable reservoirs along an extension direction of the centerline.

According to an example, the plurality of adjustable manipulators comprises a plurality of electroactive structures arranged below the outer deposit surface. Further, a change of an applied electric current results in a change of a form of the electroactive structures which leads to change of the contour of the outer deposit surface.

According to an example, the plurality of electroactive structures comprises at least one of the group of the following variations:
- In a first variation, a plurality of piezoelectric structures is provided. A change of an applied electric current results in a change of an extension of the piezoelectric structures.
- In a second variation, a plurality of electroactive polymer structures is provided. A change of an applied electric current results in a change of a form of the electroactive polymer structures.
- In a third variation, a plurality of shape memory material parts is provided. A change of an applied electric current and temperature results in change of a shape of the form shape memory material parts.

According to an example, the outer deposit surface comprises a flexible outer layer configured for expanding or shrinking.

In an option, in addition or alternatively, the outer deposit surface is configured to be wetted with a separating agent to facilitate detaching the outer deposit surface from a layed-up material.

According to an example, the support structure comprises a spinal-type center column that provides bending while having a fixed length. In an option, at least some portions of the outer deposit surface are connected to the support structure by a plurality of tensile elements to define a maximum of an outer dimension.

According to an example, a conditioning unit is provided that is connected with the adjustable manipulators to control the shape of the outer deposit surface.

According to an example, the outer deposit surface is configured for a temporal fixation of at least one of the group of a branch connector, a reinforcement inlay and an interface element.

According to the present invention, also a winding manufacturing system for generating duct components from fiber-matrix composites is provided. The system comprises at least one manufacturing tool according to one of the preceding examples and a support arrangement for holding the manufacturing tool to deposit material for generating the duct components. The system also comprises at least one material supply to feed the material onto the manufacturing tool. The manufacturing tool and the at least one material supply are movable in relation to each other.

According to an example, the support arrangement comprises at least two bearings to hold the manufacturing tool. A drive is provided to rotate the manufacturing tool in relation to the material supply to allow a winding-up of the material from the material supply onto the manufacturing tool.

According to an example, the material supply is movably hold in relation to the manufacturing tool and is rotatable around the manufacturing tool to allow a winding-up of the material from the material supply onto the manufacturing tool.

According to the present invention, also a method for generating a duct component from fiber-matrix composites in a winding application of fiber-matrix composites is provided. The method comprises the following steps:
- Providing a manufacturing tool or winding manufacturing system according to one of the examples above;
- Activating at least one of the adjustable manipulators to adjust a distance between the outer deposit surface and the support structure in order to provide a designated outer shape of the manufacturing tool;
- Mounting the manufacturing tool to bearings of a winding manufacturing system;
- Feeding fiber-matrix composite material onto the outer deposit surface of the manufacturing tool;
- Curing the material and thus generating a duct component; and
- Removing the manufacturing tool and the duct component from each other.

According to an aspect, a tool is provided that can be brought into different forms, i.e. different shapes and sizes. The tool is having an inner support structure that allows to generate a designated form and shape.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a manufacturing tool with an adaptable form for winding applications of fiber-matrix composites to generate duct components from fiber-matrix composites.
Fig. 2 schematically shows an example of a winding manufacturing system for generating duct components from fiber-matrix composites.
Fig. 3 shows basic steps of an example of a method for generating a duct component from fiber-matrix composites in a winding application of fiber-matrix composites.
Fig. 4 shows a further example of a manufacturing tool with an adaptable form in three different states.
Fig. 5 shows a further example of a manufacturing tool with an adaptable form in four different states.
Fig. 6 shows an example of a manufacturing tool with an adaptable form based on shape memory material parts.
Fig. 7 shows an example of a manufacturing tool with an adaptable form based on electroactive polymer structures.
Fig. 8 shows an example of a manufacturing tool with an adaptable form based on piezoelectric structures.
Fig. 9 shows a further example of a manufacturing tool with an adaptable form connected to a conditioning unit.
Fig. 10 shows a further example of a manufacturing tool with an adaptable form connected to a conditioning unit and with a control interface.
Fig. 11 shows a further example of a manufacturing tool with an adaptable form connected to a conditioning unit.
Fig. 12 shows a further example of a manufacturing tool with an adaptable form connected to a conditioning unit and with added branch connectors.
Fig. 13 shows another example of a winding manufacturing system.
Fig. 14 shows three different examples of a curing procedure.
Fig. 15a-f show six different states during an example of a process of generating a duct component from fiber-matrix composites in a winding application of fiber-matrix composites.
Fig. 16 shows a cross-section through an aircraft with an example of a duct component from fiber-matrix composites generated with a manufacturing tool with an adaptable form for winding applications of fiber-matrix composites.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

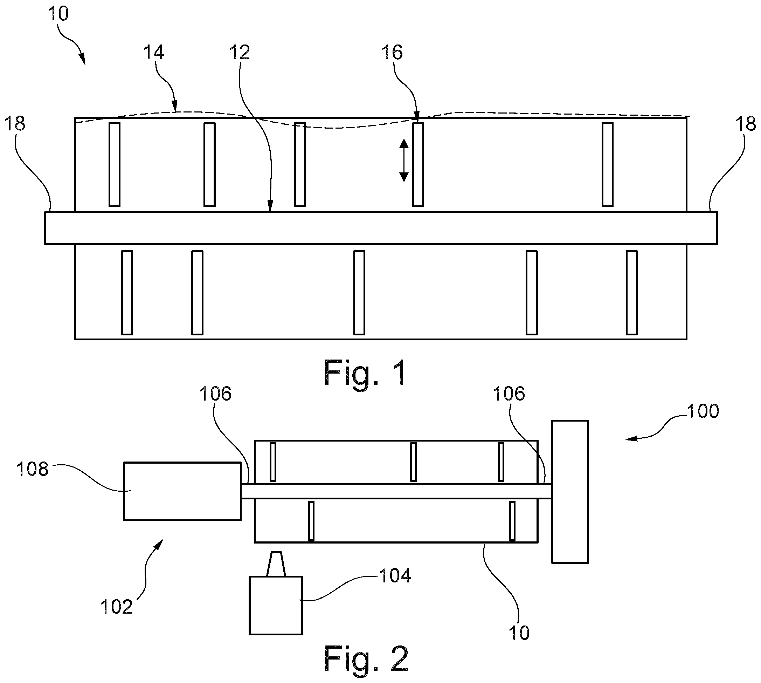

Fig. 1 schematically shows an example of a manufacturing tool 10 with an adaptable form for winding applications of fiber-matrix composites to generate duct components from fiber-matrix composites. The manufacturing tool 10 comprises a support structure 12, an outer deposit surface 14 and a plurality of adjustable manipulators 16. The support structure 12 has at least two support connectors 18 and is configured to be mounted to bearings of a winding manufacturing system by the support connectors. Further, the outer deposit surface 14 is configured for material deposit support and provides a variable circumferential contour for laying down fiber material in a winding process. The adjustable manipulators 16 are arranged between the outer deposit surface 14 and the support structure 12 to adjustably support the outer deposit surface 14 on the support structure 12. The adjustable manipulators 16 are configured to adjust a distance between the outer deposit surface 14 and the support structure 12 in order to provide different adjustable outer shapes of the manufacturing tool 10.

The support structure 12 together with the adjustable manipulators 16 forms an adjustable form core for the winding applications of fiber-matrix composites.

The manufacturing tool 10 is configured to be temporarily mounted to the fiber winding arrangement.

The outer deposit surface 14 can also be referred to as outer material deposit support surface.

The manufacturing tool 10 provides an adaptable mold for the lay-up of the material of the fiber-matrix composite component.

A field of application besides are air-conditioning ducts and air conditioning manifolds are also storage and supply tanks for e.g. hydrogen, water, wastewater, fire extinguishing substances and other tanks.

The manufacturing tool 10 can also be used in other technical fields where winding is playing a mayor role.

In an option, the majority of the outer deposit surface 14 is supported by the adjustable manipulators 16. In an example, the complete outer deposit surface 14 is supported by the adjustable manipulators 16.

The term "manufacturing tool" relates to a mold used as form to lay down fiber material. The manufacturing tool 10 defines the inner shape of the component.

The term "winding applications" relates to procedures where fibers are applied by winding them from a supply onto the mold. Winding applications also include laydown of material in prepregs or tapes.

The term "support structure" relates to a body structure providing stability to transfer wight loads two bearings holding the tool.

The term "outer deposit surface" relates to a surface provided by the tool for laying down the material.

The term "adjustable manipulators" relates to activatable components configured to change their size or shape. The term manipulators is used to point out that the activatable components actively change the shape and form of the tool.

Fig. 2 schematically shows an example of a winding manufacturing system 100 for generating duct components from fiber-matrix composites. The system 100 comprises at least one example of the manufacturing tool 10 according to one of the examples above and below. The system 100 also comprises a support arrangement 102 for holding the manufacturing tool to deposit material for generating the duct components. The system 100 further comprises at least one material supply 104 to feed the material onto the manufacturing tool. The manufacturing tool 10 and the at least one material supply 104 are movable in relation to each other.

The term "support arrangement" relates to bas structure providing stability of the system and its components.

The term "material supply" relates to a feed of the material. The material supply can comprise a material storage or depot, but can also comprise a feed of material from a storage.

As an example, the manufacturing tool 10 is installed in a winding apparatus. A winding machine places the material at the tool surface. After material deposit, the curing occurs. After curing, the manufacturing tool is depressurized to enable a removing out of the final part, i.e. out of the duct component.

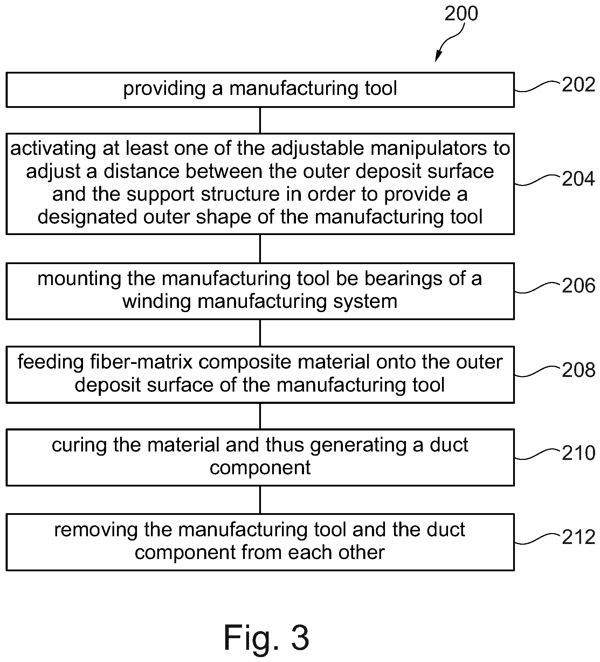

Fig. 3 shows basic steps of an example of a method 200 for generating a duct component from fiber-matrix composites in a winding application of fiber-matrix composites. The method 200 comprises the following steps:
- In a first step 202, a manufacturing tool according to one of the example above and below is provided.
- In a second step 204, at least one of the adjustable manipulators is activated to adjust a distance between the outer deposit surface and the support structure in order to provide a designated outer shape of the manufacturing tool.
- In a third step 206, the manufacturing tool is mounted to bearings of a winding manufacturing system.
- In a fourth step 208, fiber-matrix composite material is fed onto the outer deposit surface of the manufacturing tool.
- In a fifth step 210, the material is cured and thus a duct component is generated.
- In a sixth step 212, the manufacturing tool and the duct component are removed from each other.

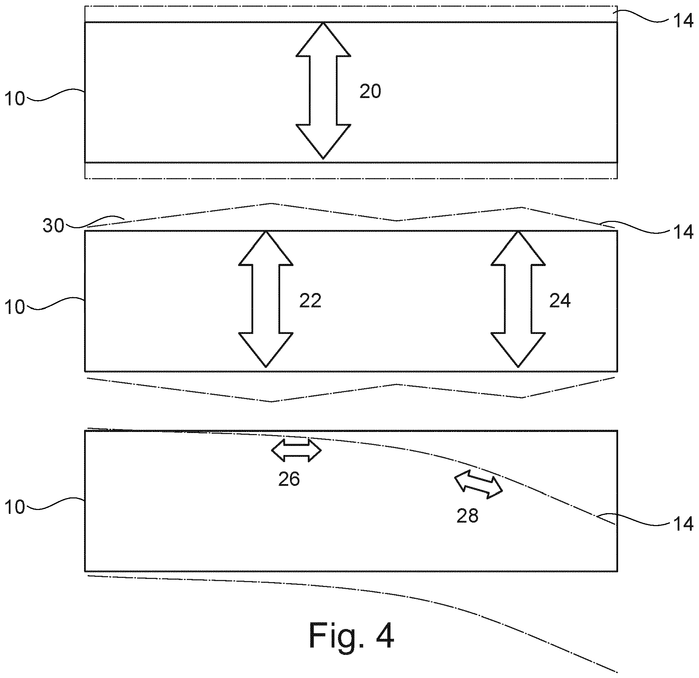

Fig. 4 shows a further example of a manufacturing tool with an adaptable form in three different states. In the upper part, a uniform expansion 20 is provided. In the middle part, a non-uniform expansion is provided with two expanded parts 22 and 24. In the lower part, a bending is provided. For example, two different degrees of bending 26 and 28 are indicated.

In an option, the outer deposit surface 14 comprises a flexible outer layer 30 configured for expanding or shrinking. As an option, the outer deposit surface is configured to be wetted with a separating agent to facilitate detaching the outer deposit surface from a layed-up material.

In an example, the outer deposit surface 14 comprises a flexible outer surface to enable a shape changing without providing crinkles or other forms of small unevenness.

In an example, the surface of the tool will be wetted with a separating agent to avoid a bonding to the DMT during the fiber application.

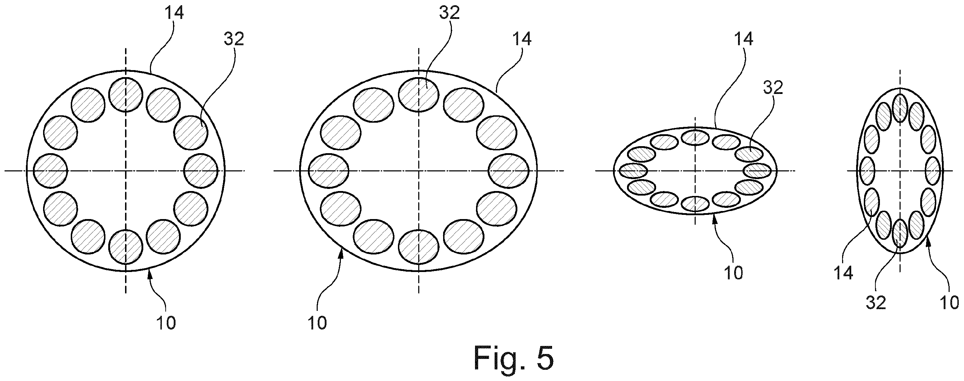

Fig. 5 shows a further example of a manufacturing tool with an adaptable form in four different states. As an option, the plurality of adjustable manipulators 16 comprises a plurality of pressurizable reservoirs 32 arranged below the outer deposit surface 14. A change of a pressure of a fluid inside the reservoirs 32 results in a change of a form of the reservoirs 32 which leads to change of the contour of the outer deposit surface 14. The left part shows the reservoirs 32 uniformly pressurized forming a circular cross-section with enlarged diameter. The middle-left part shows the reservoirs 32 differently pressurized such that an oval cross-section with enlarged diameter is provided. The middle-right part shows the reservoirs 32 also differently pressurized, but to a lesser degree, such that an oval cross-section with a smaller diameter is provided, while the longer diameter is oriented horizontally (when viewing Fig. 5 in landscape mode). The right part shows the reservoirs 32 also differently pressurized to a lesser degree, but such that an oval cross-section with a smaller diameter is provided, while the longer diameter is oriented vertically.

The term "pressurizable reservoirs" relates to one or more containers to receive a medium in order to provide a pressure force on the inside of the reservoirs.

As an advantage, a pressurized tool is provided that is adaptable in expanding, shaping and bending. This allows a plurality of applications and a facilitated and economic modification possibility.

As an example, the manufacturing tool comprises - in length and along the diameter - a set of pressurized balloons. These balloons can individually be pressurized to give the DMT the different shapes.

The different shape of the DMT is combined with a flexible outer surface that can be expanded or that is shrinking, depending on the shape. Thus, a shape is provided which can be used for a winding manufacturing process.

As an example, winding material like carbon fiber reinforced plastic (CFRP), glass fiber reinforced plastic (GFRP) or the like is then applicated to the surface of the DMT.

A field of application is for manufacturing that does not use an autoclave process, e.g. a manufacturing with no pressure or hot heating process. For example, the winding material is cured with UV light or with other curing procedures. After finishing the winding process, the DMT can be subject to a shrinking or deflating procedure, e.g. to have a lower diameter to remove the DMT out of the final part.

In an option, the reservoirs 32 are pressurizable between a depressurized state and a maximum pressurized state. As an option, the reservoirs 32 are pressurizable individually.

The term "depressurized state" relates to a state with no or at least a rather low compression.

The term "maximum pressurized state" relates to a state with a high pressure. The amount of the pressure in the maximum pressurized state depends on the application and further details of the manufacturing tool 10 such as material of the reservoirs 32 and material of the outer deposit surface.

In an example, the dynamic manufacturing tool 10 will be brought into a predetermined shape by pressurizing or de-pressurizing of the reservoirs 32 inside the tool.

In an example, the reservoirs 32 are provided as balloon-like structures.

The predetermined shape can also be referred to as target shape.

In an option, at least one of the pressurizable reservoirs 32 is fluidly connected to a fluid supply 34.

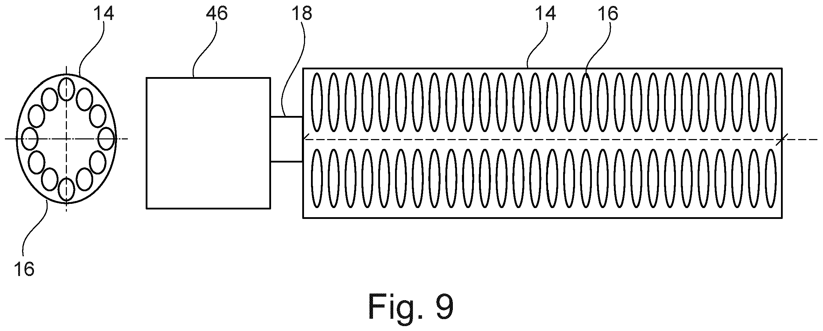

In an example, the plurality of pressurizable reservoirs is arranged as a web 36. In an option, the web 36 has a number of pressurizable reservoirs in a circumferential direction around a centerline (see e.g. Fig. 5). In an alternative or additional option, the web 36 has a number of pressurizable reservoirs along an extension direction of the centerline (see e.g. Fig. 9).

The term "web" relates to a plurality of reservoirs distributed across a larger part of the outer deposit surface.

In an example, the manufacturing tool is having a longitudinal extension along the centerline. For example, the manufacturing tool has an elongate shape in a lengthwise direction. In a cross-direction, the manufacturing tool has a rounded shape, e.g. a convex shape. However, the outer form and in particular the cross-shape of the manufacturing tool are adaptable.

As an example, the diameter is expandable by pressurizing the reservoirs. In an example, all reservoirs along a circumferential direction can be pressurized to increase the diameter in a constant manner. In another example, selected reservoirs along a circumferential direction can be pressurized to increase the diameter in a different manner, e.g. to achieve an elliptic or oval cross-shape.

As an example, the shape of the manufacturing tool along the centerline is changeable by pressurizing the reservoirs. In an example, all reservoirs along one longitudinal side are pressurized to achieve a bending in the direction of the opposite longitudinal side. In another example, selected reservoirs along one longitudinal side are pressurized to achieve alternate bendings in different directions in relation to the centerline.

In an example, bending of the manufacturing tool is provided by increasing the pressure in the balloons on one single side of the tool. The position of the pressurized balloons and pressure of the balloons regulate the shape of the tube of the manufacturing tool.

Shaping of the manufacturing tool is provided by increasing the pressure in the reservoirs on different positions of the tool. The position of the pressurized balloons and the pressure of the balloons regulate the shape of the tool.

In an option, the pressurizable reservoirs are provided as balloons that can be filled with a fluid from the fluid supply.

In an example, the fluid is air or another form of a gaseous medium. In another example, the fluid is provided as a liquid medium. In a further example, the fluid is provided as a mixture of a gaseous medium and a liquid medium.

In an option, the plurality of adjustable manipulators 16 comprises a plurality of electroactive structures 38 arranged below the outer deposit surface 14. A change of an applied electric current results in a change of a form of the electroactive structures 38 which leads to change of the contour of the outer deposit surface 14.

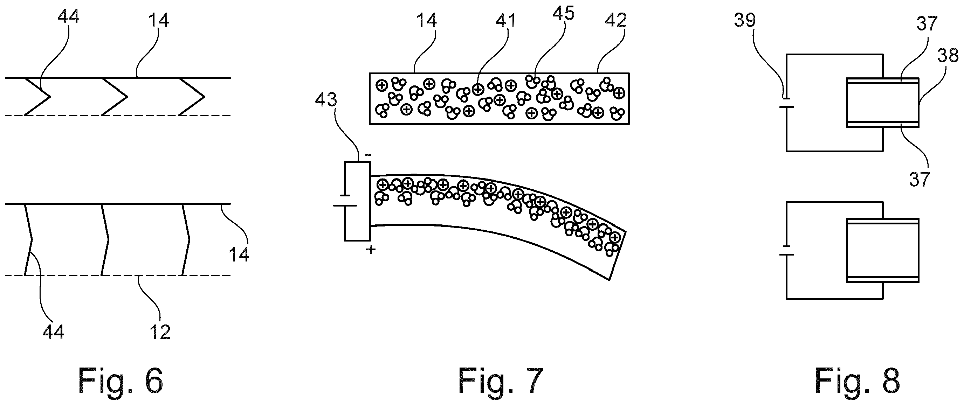

Fig. 6 shows an example of the manufacturing tool 10 with an adaptable form based on a first variation of the plurality of electroactive structures 38. In the first variation, the plurality of electroactive structures 38 comprises a plurality of piezoelectric structures 40. A change of an applied electric current 39 to electrodes 37 on the piezo-element results in a change of an extension of the piezoelectric structures 40.

Fig. 7 shows an example of the manufacturing tool 10 with an adaptable form based on a second variation of the plurality of electroactive structures 38. In the second variation, the plurality of electroactive structures 38 comprises a plurality of electroactive polymer structures 42. A change of an applied electric current 43 applied to the polymer comprising embedded cations 41 and water 45 results in a change of a form of the electroactive polymer structures 42.

Fig. 8 shows an example of the manufacturing tool 10 with an adaptable form based on a third variation of the plurality of electroactive structures 38. In the third variation, the plurality of electroactive structures 38 comprises a plurality of shape memory material parts 44. A change of an applied electric current and temperature results in change of a shape of the form shape memory material parts 44.

As an option, the piezoelectric structures 40, or the electroactive polymer structures 42 or the shape memory material parts 44 are embedded within a gearing structure (not shown in detail) with levers or other leveraging structures such that small changes by the electroactive structures result in larger changes of the contour.

As an option, the piezoelectric structures 40, or the electroactive polymer structures 42 or the shape memory material parts 44 are provided in different combinations.

The term "gearing structure" relates to any structure or devices that achieve a larger movement or change than actually provided by the electroactive structure.

In another example, provided in addition or alternative to an applied electric current, a change of an applied temperature results in a change of a form of the shape memory material parts.

In an option (not shown in detail), tensile elements between the support structure 12 and the outer deposit surface 14 are provided with shape memory part sections to provide tensile elements with adjustable length. In an example, the tensile elements with the adjustable length are provided as the adjustable manipulators. In an example, the outer deposit surface can be pressurized from inside the tool, e.g. inflated, and the tensile elements with the adjustable length provide the adaptable outer shape.

As an option, connecting interfaces are provided at least on one end of the manufacturing tool to connect two or more of the manufacturing tools.

Fig. 9 shows a further example of a manufacturing tool with an adaptable form connected to a conditioning unit 46. The conditioning unit 46 is connected with the adjustable manipulators 16 to control the shape of the outer deposit surface 14.

The term "conditioning unit" relates to a control and activation unit to change the condition such as pressure to the reservoirs 32 or current applied to the electroactive structures 38.

In an example, the conditioning unit 46 is a pressure generating unit provided at one side of the manufacturing tool to pressurize each single reservoir 32 inside the manufacturing tool 10. As an example, the reservoirs 32 are provided as balloons. The pressure defines the outer shape of the manufacturing tool 10.

To fill the balloons, gaseous or fluid mediums can be used.

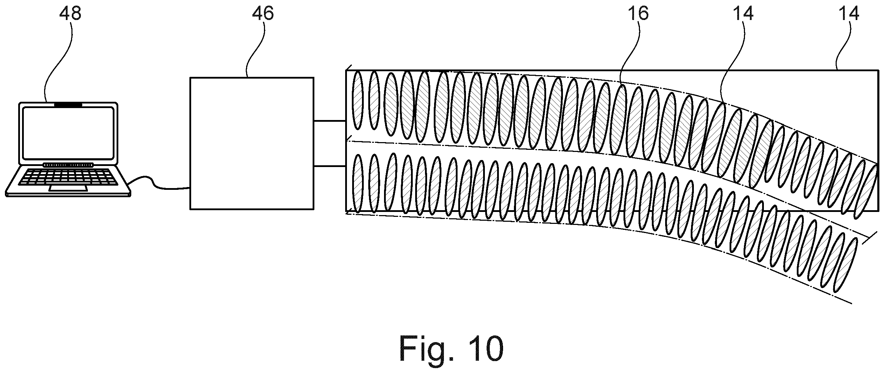

Fig. 10 shows a further example of a manufacturing tool with an adaptable form connected to an example of the conditioning unit 46. Further, a control interface 48 is provided.

In an option, a numeric controlled device like a processing unit regulates the pressure. The processing unit can be provided by the control interface 48.

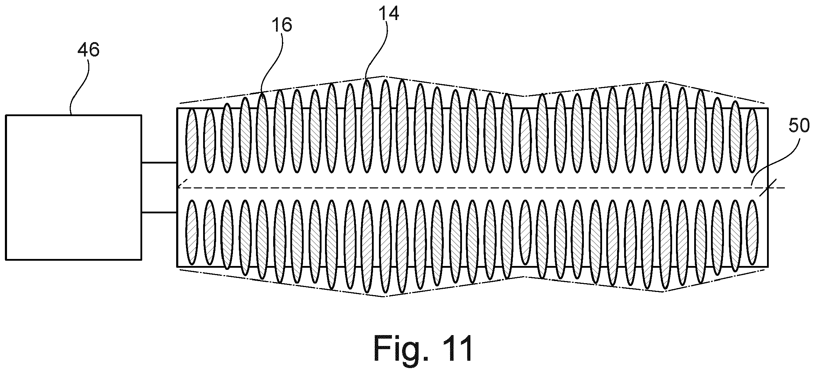

In an option (see e.g. Fig. 11), the support structure comprises a spinal-type center column 50 that provides bending while having a fixed length; and

As an option, at least some portions of the outer deposit surface are connected to the support structure by a plurality of tensile elements to define a maximum of an outer dimension.

Fig. 11 shows a further example of a manufacturing tool with an adaptable form connected to a conditioning unit.

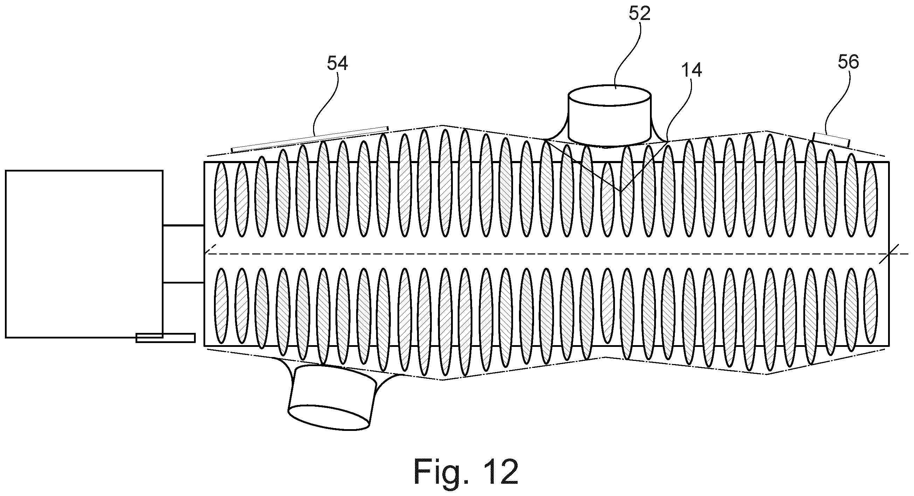

Fig. 12 shows a further example of the manufacturing tool 10 with the adaptable form. In an option, the manufacturing tool 10 is connected to an example of the conditioning unit 46.

As a further option, the outer deposit surface is configured for a temporal fixation of at least one of the group of: branch connectors and reinforcement inlays and interface element. Fig. 12 shows two branch connectors 52 added to the outer deposit surface. As an additional or alternative option, a reinforcement inlay 54 is provided. As a further additional or alternative option, an interface element 56 is provided.

The branch connector 52 provides a connecting interface for the connection of a further component like a further duct or conduit.

The reinforcement inlay 54 provides a locally increased stability for increased load bearings or other locally increased impact on the component.

The interface element 56 provides a connectivity of further parts like sensors, valves or mounts.

In an option, to increase the shape flexibility, an additional branch or other geometry can be temporarily fixed at the DMT. This further supports minimizing the amount of different toolings for components with different geometries and shapes.

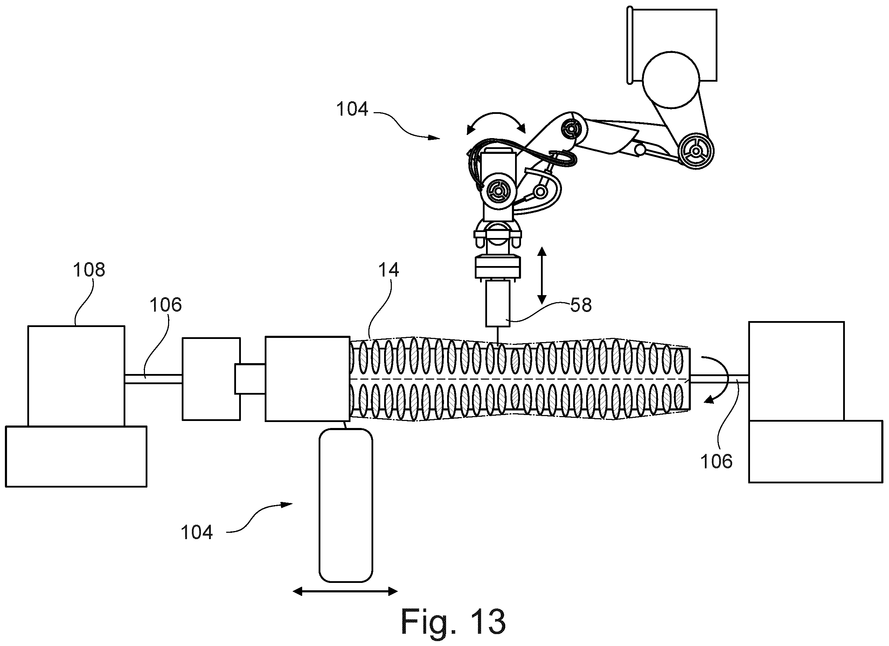

Fig. 13 shows another example of the winding manufacturing system 100. The manufacturing tool 10 is arranged within an example of the support arrangement 102.

In an option, the support arrangement 102 comprises at least two bearings 106 to hold the manufacturing tool.

In another option, also shown, a drive 108 is provided to rotate the manufacturing tool 10 in relation to the material supply 104 to allow a winding-up of the material from the material supply onto the manufacturing tool 10.

The term "drive" relates to a motor or other sort of manipulator achieving the movement.

In an option, the material supply 104 is movably hold in relation to the manufacturing tool 10 and is rotatable around the manufacturing tool 10 to allow a winding-up of the material from the material supply onto the manufacturing tool 10.

As an option, an additional robot arm 58 is provided that increases the flexibility of the winding process to enable multidirectional placement of rowings of a fiber material.

As a further option, two or more of the manufacturing tools are provided and connected such that a more complex component can be formed during generating the component.

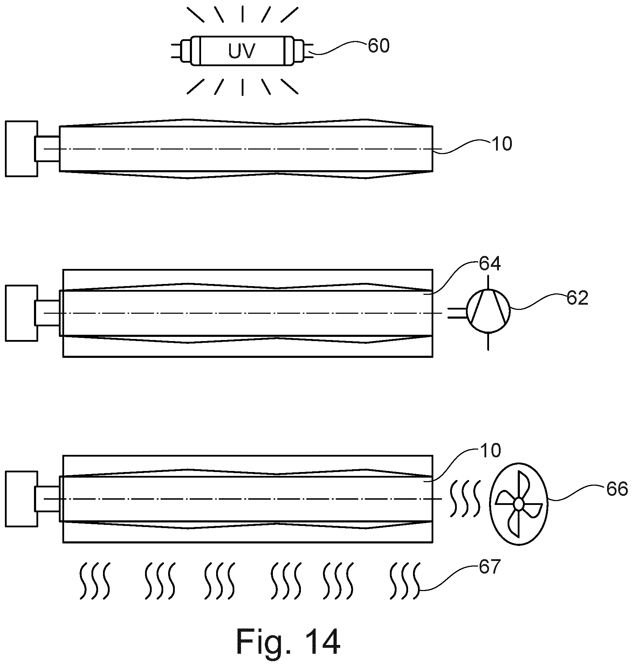

Fig. 14 shows three different examples of a curing procedure.

In an upper part, curing of the component on the manufacturing tool 10 is provided via UV-light 60.

In a middle part, curing of the component on the manufacturing tool 10 via vacuum 62 with foils 64 around the tool 10 is provided.

In a lower part, curing of the component on the manufacturing tool 10 via hot air 66 in- and outside of the part with or without the vacuum pack is provided. In addition or alternatively, curing is provided by warming 67.

In further options, also other curing processes with no effect on the tool are provided.

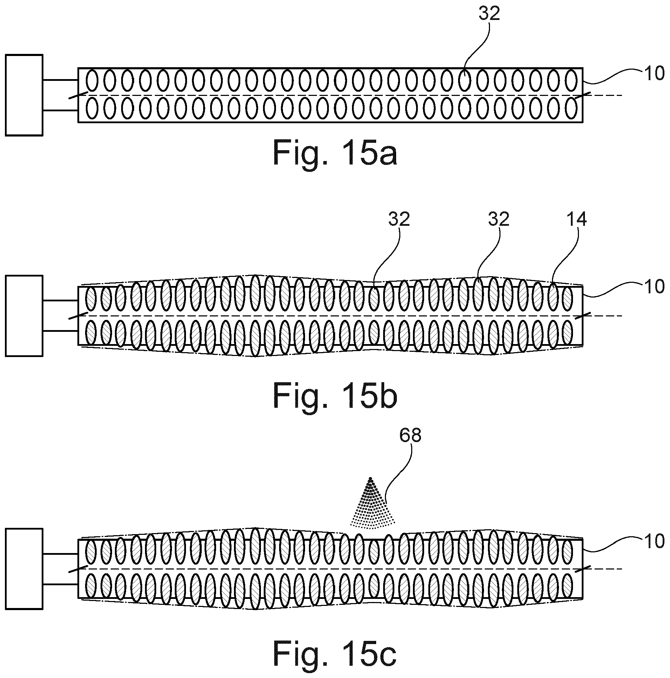

Fig. 15a-f show six different states during an example of a process of generating a duct component from fiber-matrix composites in a winding application of fiber-matrix composites.

As indicated in Fig. 15a, in an example, a de-pressurized manufacturing tool 10 is provided. The tool, i.e. the shape of the tool is conditioned to bring it in the desired shape. For example, the reservoirs 32 are in an initial state.

As indicated in Fig. 15b, pressure will be distributed to the different balloons. Some of the reservoirs 32 are pressurized with a larger pressure, while others are pressurized with a lower pressure.

Next, as indicated in Fig. 15c, as an option, a separating agent 68 is deposited on the tool 10, e.g. layed or sprayed, to avoid a curing of the supplied material sticking to the tool's surface.

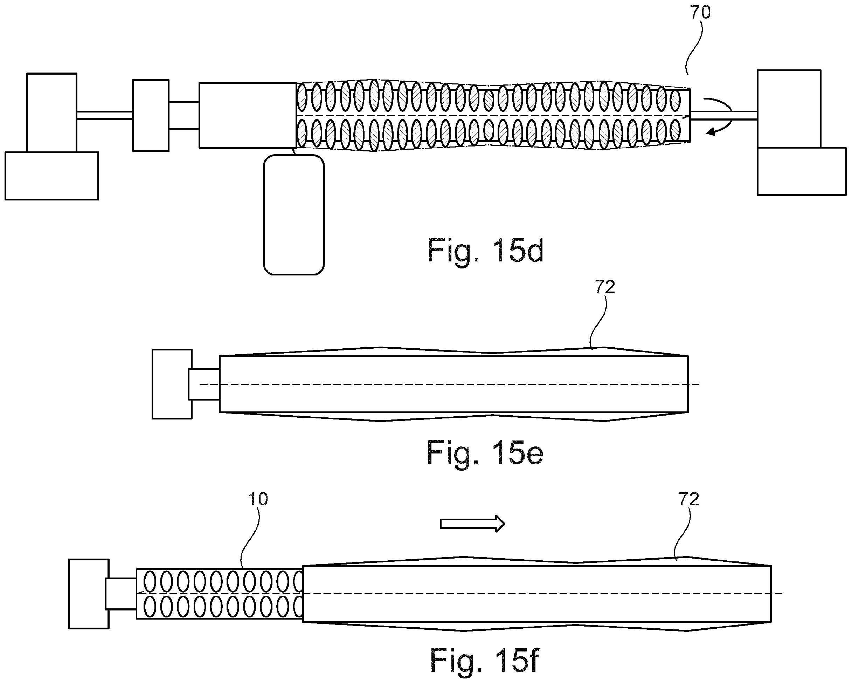

As indicated in Fig. 15d, the manufacturing tool 10 is installed in a winding machine 70 and the fiber lay-up on the tool's surface is started. In a first option, the non-pressurized tool is installed in the winding machine first and then pressurized. In a second option, the non-pressurized tool is pressurized first and then installed in the winding machine. During the fiber lay-up, a pre-preg or a resin transfer molding or other process can be used to impregnate the layed-up fiber.

As indicated in Fig. 15e, after the layup, a curing to transform the deposited material into a generated final part 72 is provided. As an option, UV curing is provided. As another option, a vacuum foil is provided around the tool and pressure is applied for compacting the layed-up material. As a further option, ventilation curing is provided. As another option, a heating is provided that is adapted to heat constraints given by the adjustable manipulators, e.g. the reservoirs. As an example, a modified heating is provided. Still further, combinations of the different curing methods are provided.

As indicated in Fig. 15f, after curing, the pressure is released and the manufacturing tool 10 is removed out of the generated final part 72, or the generated final part 72 is removed from the manufacturing tool 10.

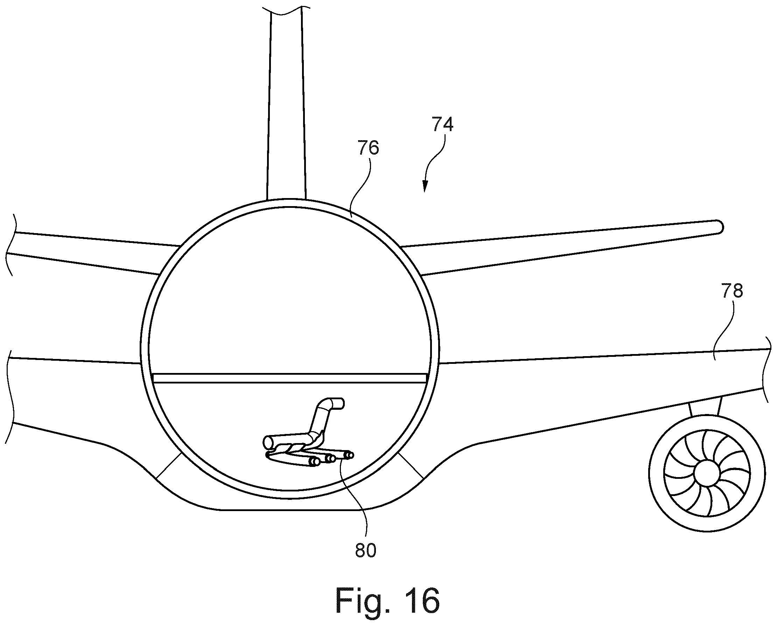

Fig. 16 shows a cross-section through an aircraft 74 with a fuselage structure 76 and an indicated wing structure 78. Further an example of a duct component 80 from fiber-matrix composites generated with the manufacturing tool 10 with an adaptable form for winding applications of fiber-matrix composites. It is noted that the duct component 80 is shown schematically only to illustrate the suitability for such components with a rather complex geometry.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A manufacturing tool (10) with an adaptable form for winding applications of fiber-matrix composites to generate duct components from fiber-matrix composites, the tool comprising:
- a support structure (12);
- an outer deposit surface (14); and
- a plurality of adjustable manipulators (16);
wherein the support structure has at least two support connectors (18) and is configured to be mounted to bearings of a winding manufacturing system by the support connectors;
wherein the outer deposit surface is configured for material deposit support and provides a variable circumferential contour for laying down fiber material in a winding process;
wherein the adjustable manipulators are arranged between the outer deposit surface and the support structure to adjustably support the outer deposit surface on the support structure; and
wherein the adjustable manipulators are configured to adjust a distance between the outer deposit surface and the support structure in order to provide different adjustable outer shapes of the manufacturing tool.

2. Tool according to claim 1, wherein the plurality of adjustable manipulators comprises a plurality of pressurizable reservoirs (32) arranged below the outer deposit surface; and
wherein a change of a pressure of a fluid inside the reservoir results in a change of a form of the reservoir which leads to change of the contour of the outer deposit surface.

3. Tool according to claim 2, wherein the reservoirs are pressurizable between a depressurized state and a maximum pressurized state; and
wherein, preferably, the reservoirs are pressurizable individually.

4. Tool according to claim 2 or 3, wherein at least one of the pressurizable reservoirs is fluidly connected to a fluid supply (34).

5. Tool according to claim 2, 3 or 4, wherein the plurality of pressurizable reservoirs is arranged as a web with a number of pressurizable reservoirs in a circumferential direction around a centerline and a number of pressurizable reservoirs along an extension direction of the centerline.

6. Tool according to claim 1, wherein the plurality of adjustable manipulators comprises a plurality of electroactive structures (38) arranged below the outer deposit surface; and
wherein a change of an applied electric current results in a change of a form of the electroactive structures which leads to change of the contour of the outer deposit surface.

7. Tool according to claim 6, wherein the plurality of electroactive structures comprises at least one of the group of:
i) a plurality of piezoelectric structures (40); wherein a change of an applied electric current results in a change of an extension of the piezoelectric structures;
ii) a plurality of electroactive polymer structures (42); wherein a change of an applied electric current results in a change of a form of the electroactive polymer structures; and
iii) a plurality of shape memory material parts (44); wherein a change of an applied electric current and temperature results in change of a shape of the form shape memory material parts.

8. Tool according to one of the preceding claims, wherein the outer deposit surface comprises a flexible outer layer (30) configured for expanding or shrinking; and
wherein, preferably, the outer deposit surface is configured to be wetted with a separating agent to facilitate detaching the outer deposit surface from a layed-up material.

9. Tool according to one of the preceding claims, wherein the support structure comprises a spinal-type center column (50) that provides bending while having a fixed length; and
wherein, preferably, at least some portions of the outer deposit surface are connected to the support structure by a plurality of tensile elements to define a maximum of an outer dimension.

10. Tool according to one of the preceding claims, wherein a conditioning unit (46) is provided that is connected with the adjustable manipulators to control the shape of the outer deposit surface.

11. Tool according to one of the preceding claims, wherein the outer deposit surface is configured for a temporal fixation of at least one of the group of: branch connector (52), reinforcement inlay (54) and interface element (56).

12. A winding manufacturing system (100) for generating duct components from fiber-matrix composites, the system comprising:
- at least one manufacturing tool (10) according to one of the preceding claims;
- a support arrangement (102) for holding the manufacturing tool to deposit material for generating the duct components; and
- at least one material supply (104) to feed the material onto the manufacturing tool;
wherein the manufacturing tool and the at least one material supply are movable in relation to each other.

13. System according to claim 12, wherein the support arrangement comprises at least two bearings (106) to hold the manufacturing tool; and
wherein a drive (108) is provided to rotate the manufacturing tool in relation to the material supply to allow a winding-up of the material from the material supply onto the manufacturing tool.

14. System according to claim 12 or 13, wherein the material supply is movably hold in relation to the manufacturing tool and is rotatable around the manufacturing tool to allow a winding-up of the material from the material supply onto the manufacturing tool.

15. A method (200) for generating a duct component from fiber-matrix composites in a winding application of fiber-matrix composites, the method comprising the following steps:
- providing (202) a manufacturing tool according to one of the claims 1 to 11;
- activating (204) at least one of the adjustable manipulators to adjust a distance between the outer deposit surface and the support structure in order to provide a designated outer shape of the manufacturing tool;
- mounting (206) the manufacturing tool to bearings of a winding manufacturing system;
- feeding (208) fiber-matrix composite material onto the outer deposit surface of the manufacturing tool;
- curing (210) the material and thus generating a duct component; and
- removing (212) the manufacturing tool and the duct component from each other.
